# EUROPEAN PATENT APPLICATION

(11) **EP 4 796 834 A1**
(43) Date of publication of application: **26.08.2026**
(21) Application number: 24879615.3
(22) Date of filing: 08.10.2024
(51) Int. Cl.: F21S 41/29, F21S 41/43, F21S 41/47, F21S 41/143, F21S 41/153, F21S 41/255, F21S 41/663, F21S 45/70, F21V 5/00, F21V 23/00, F21W 102/135, F21Y 105/10, F21Y 115/10, B60Q 1/14, F21S 41/265, F21S 41/275

(54) **PROJECTION LENS AND LIGHTING FIXTURE FOR VEHICLE**

(30) Priority: 19.10.2023 JP 2023180259
(71) Applicant: Koito Manufacturing Co., Ltd., Shinagawa-ku, Tokyo 141-0001 (JP)
(72) Inventor: UCHIDA, Naoki, Shizuoka-shi, Shizuoka 424-8764 (JP)
(74) Representative: Stöckeler, Ferdinand
(86) International application number: PCT/JP2024/035893
(87) International publication number: WO 2025/084190

(57) **Abstract**

Provided are a projection lens and a vehicle lighting fixture that prevent reduction in the accuracy of a light distribution pattern and occurrence of glare due to abnormal refraction in a lens peripheral edge region. In a projection lens (2), resin lenses (21 to 23) are disposed side by side in a lens optical axis (Lx) direction in a lens barrel (20), and light emitted from a light source (30) is projected in a required light distribution pattern. A light shielding ring (25) covering a peripheral edge region of the lens is disposed between the lenses (21, 22) adjacent to each other in the lens optical axis direction. The light shielding ring (25) prevents abnormal refraction due to transmission of light through a low accuracy region (AL) caused in a peripheral edge portion of the resin-molded lens (21 to 23), and prevents reduction in the accuracy of the light distribution pattern and occurrence of glare.

## Description

### TECHNICAL FIELD

The present invention relates to a projection lens including a plurality of lenses and a vehicle lighting fixture suitable for application to a headlight (head lamp) that projects light for a required light distribution pattern using the projection lens.

### BACKGROUND ART

As a head lamp of a vehicle such as an automobile, a projector type head lamp that projects light from a light source in a required light distribution pattern by a projection lens has been proposed. In this type of lamp, in order to reduce lens aberration in the projection lens and improve the pattern accuracy of the light distribution pattern, the projection lens may be configured as a composite lens including a plurality of lenses. In addition, in order to reduce the weight of the projection lens, it has been proposed that the projection lens is made of resin. Patent Literature 1 describes a projection lens including a plurality of lenses made of resin.

However, in the resin lens, due to "sink", "weld", or the like at the time of molding with a mold, a region (hereinafter, referred to as a low accuracy region) in which lens shape molding accuracy is reduced is likely to be caused in a peripheral edge region of the lens, that is, in a circumferential region along the circumference of the lens in the case of a circular lens. In such a low accuracy region, abnormal refraction occurs, in which light refracted by the lens is not refracted as designed. When such abnormal refraction occurs, there arises a problem that the pattern accuracy of the light distribution pattern decreases in the head lamp. Alternatively, there is a problem that abnormally refracted light becomes glare light that dazzles other vehicles.

In recent years, there has been proposed a head lamp of adaptive driving beam (ADB) light distribution control that controls light distribution so as not to dazzle other vehicles and pedestrians such as an oncoming vehicle and a preceding vehicle detected from an image or the like captured by a camera. A projection lens for performing such ADB light distribution control is often configured as a composite lens including a plurality of lenses in order to reduce lens aberration, and therefore, a portion with abnormal refraction in the entire composite lens increases, and reduction in the pattern accuracy and occurrence of glare become noticeable.

### CITATION LIST

### PATENT LITERATURE

Patent Literature 1: JP-A-2017-204400

### SUMMARY OF INVENTION

### PROBLEMS TO BE SOLVED BY INVENTION

The technique of Patent Literature 1 adopts a configuration in which the lenses are held by a frame-shaped holder (also referred to as a lens fitting) supporting peripheral edge portions of the plurality of lenses. Thus, by covering the peripheral edge region of the lens with this lens holder, it is considered that abnormally refracted light is shielded to solve the problem due to abnormal refraction. However, this configuration requires a plurality of holders for holding the plurality of lenses, which causes a problem that the structure of the composite lens becomes complicated. In addition, in order to reduce the size and weight of the lamp, it is conceivable to reduce or omit the holder, for example, to bond or weld the lens to the holder. However, when such a configuration is adopted, the lens peripheral edge region cannot be covered using the holder, and the problem due to abnormal refraction cannot be solved.

An object of the present invention is to provide a projection lens capable of solving a problem due to abnormal refraction in a lens peripheral edge region and forming a highly accurate light distribution pattern which does not cause glare, and a vehicle lighting fixture including the projection lens.

### SOLUTION TO PROBLEMS

The present invention is a projection lens in which a plurality of resin lenses is disposed side by side in a lens optical axis direction in a lens barrel and light emitted from a light source is projected in a required light distribution pattern, the projection lens including a light shielding ring disposed between the lenses adjacent to each other in the lens optical axis direction and covering a peripheral edge region of the lens. The present invention is a projection lens in which at least one resin lens and at least one glass lens are disposed side by side in a lens optical axis direction in a lens barrel and light emitted from a light source is projected in a required light distribution pattern, the projection lens including a light shielding ring disposed between the lenses adjacent to each other in the lens optical axis direction and covering a peripheral edge region of the resin lens.

In the present invention, the peripheral edge region of the lens is a region including a low accuracy region caused when the lens is resin-molded, and the light shielding ring has a shape covering at least the low accuracy region. Preferably, the lens includes a lens effective region through which light for projecting a light distribution pattern is transmitted and a flange portion provided at a peripheral edge portion of the lens effective region, and the peripheral edge region of the lens is a region along a boundary between the lens effective region and the flange portion.

The present invention is a vehicle lighting fixture including a light source and a projection lens that projects light emitted from the light source in a required light distribution pattern. In the projection lens, a light shielding ring covering a peripheral edge region of a lens is disposed between lenses adjacent to each other in a lens optical axis direction. For example, the light source includes a multi-divided light emitting element in which many micro light emitting elements are arranged, and performs ADB light distribution control by controlling light emission from the micro light emitting elements.

### EFFECTS OF INVENTION

According to the present invention, the light shielding ring covering the lens peripheral edge region can prevent projection of abnormally refracted light. As a result, it is possible to obtain the projection lens and the vehicle lighting fixture capable of preventing reduction in the accuracy of the light distribution pattern and glare due to abnormal refraction.

### BRIEF DESCRIPTION OF DRAWINGS

Fig. 1 is a perspective view of a schematic configuration of a head lamp including a projection lens according to an embodiment of the present invention.
Fig. 2 is an external perspective view of a schematic configuration of an ADB lamp unit.
Fig. 3 is a block diagram of an ADB control system.
Fig. 4 is a longitudinal sectional view of the ADB lamp unit.
Fig. 5 is an exploded perspective view of a main part of a projection lens.
Fig. 6 is a longitudinal sectional view for explaining a low accuracy region in a lens.
Figs. 7(a) and 7(b) are views for explaining a light shielding ring, where Fig. 7(a) is a partially-broken exploded perspective view and Fig. 7(b) is an enlarged longitudinal sectional view.
Figs. 8(a) and 8(b) are light distribution characteristic diagrams showing an example of a light distribution pattern, where Fig. 8(a) is a diagram schematically showing projection of a high beam light distribution pattern and a low beam light distribution pattern, and Fig. 8(b) is a diagram schematically showing projection of an ADB light distribution pattern in a case where a front vehicle is present.
Fig. 9 is a longitudinal sectional view of an ADB lamp unit of another embodiment.
Fig. 10 is a longitudinal sectional view of an ADB lamp unit of another different embodiment.
Fig. 11 is an exploded perspective view of a lens and a light shielding ring according to another embodiment.

### DESCRIPTION OF EMBODIMENTS

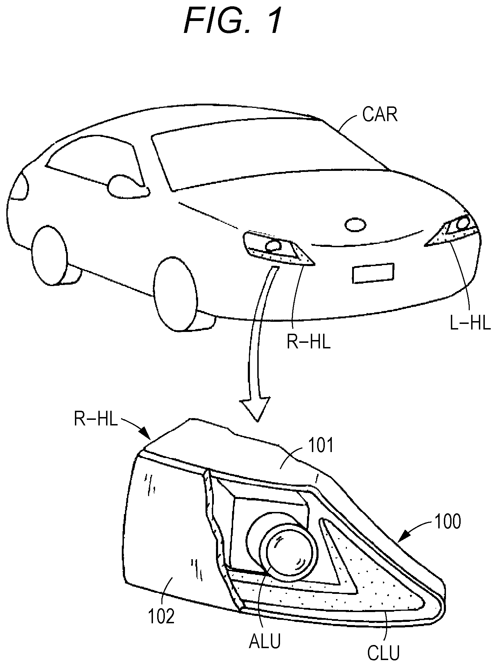

Next, an embodiment of the present invention will be described with reference to the drawings. Fig. 1 shows a schematic configuration of an automobile including a head lamp to which the present invention is applied and a schematic perspective view of the head lamp.

Right and left head lamps R-HL, L-HL are attached to right and left front portions of a vehicle body of an automobile CAR, respectively. Each of the head lamps R-HL, L-HL includes an ADB lamp unit ALU for ADB light distribution control, and is disposed in a lamp housing 100. In addition, an auxiliary lamp unit including a light guide, for example, a clearance lamp unit CLU, is also disposed in the lamp housing, but the description thereof is omitted here.

The lamp housing 100 includes a lamp body 101 opened forward of the automobile and a translucent cover 102 attached to such an opening, and the ADB lamp unit ALU is disposed in the lamp housing 100. As will be described in detail later, this ADB lamp unit ALU is configured to project an ADB light distribution pattern by irradiating a front region of the automobile with light emitted from a light source with a projection lens. In this form, the ADB lamp unit ALU is also capable of projecting a light distribution pattern including a low beam light distribution and a high beam light distribution.

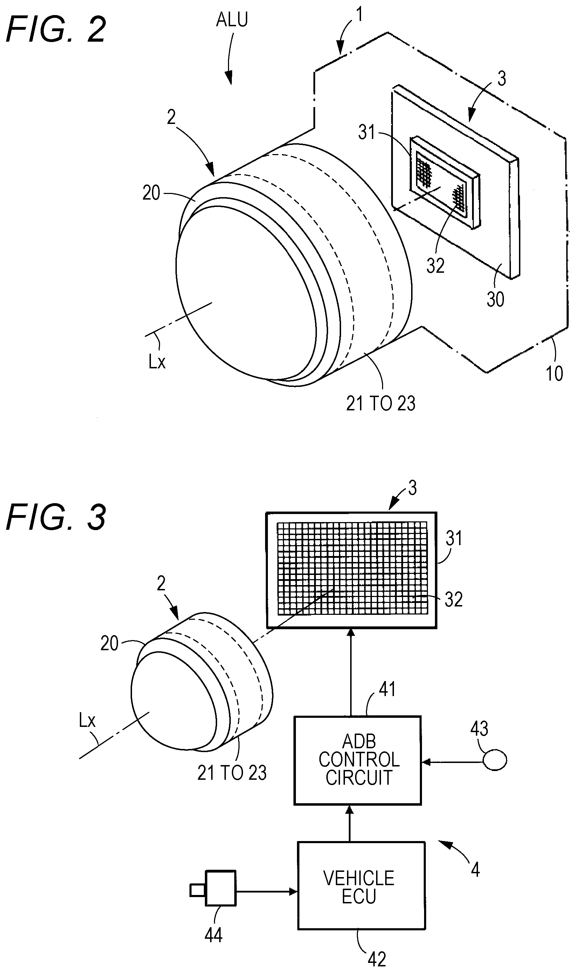

Fig. 2 is an external perspective view of a schematic configuration of the ADB lamp unit ALU. In Fig. 2, a lamp unit case 1 includes a heat sink 10 as schematically indicated by a virtual line, and a light source unit 3 is disposed inside. The light source unit 3 includes a micro light emitting diode (LED) array 31 as the light source, and the micro LED array 31 is mounted on a light source substrate 30 internally supported by the unit case 1. In the micro LED array 31, many micro LEDs 32 that emit white light are arranged vertically and horizontally in a matrix, and any of these micro LEDs selectively emits light under the control of an ADB control system 4 (described later).

The ADB lamp unit ALU includes a projection lens 2 in which a plurality of lenses 21 to 23 is housed in a lens barrel 20, and is configured to project light emitted from the micro LED array 31 toward the front of the lamp and perform projection in a light distribution pattern corresponding to a required light distribution pattern, that is, a light source pattern formed when the micro LEDs 32 of the micro LED array 31 emit light.

Fig. 3 is a block diagram of the ADB control system 4, and includes an ADB control circuit 41 that controls light emission from the micro LED array 31 as the light source. A lighting control switch 43 to be operated by a driver is connected to the ADB control circuit 41, and when the lighting control switch 43 is set and operated, the ADB control circuit 41 controls light emission from the micro LED array 31. A vehicle electronic control unit (ECU) 42 to which an in-vehicle camera 44 is connected is connected to the ADB control circuit 41, and the vehicle ECU 42 detects a front vehicle present in the front region of the automobile based on an image of the front region captured by the in-vehicle camera 44. The ADB control circuit 41 is configured to perform the ADB light emission control on the micro LED array 31 so as not to dazzle the front vehicle detected by the vehicle ECU 42 when the ADB control is set.

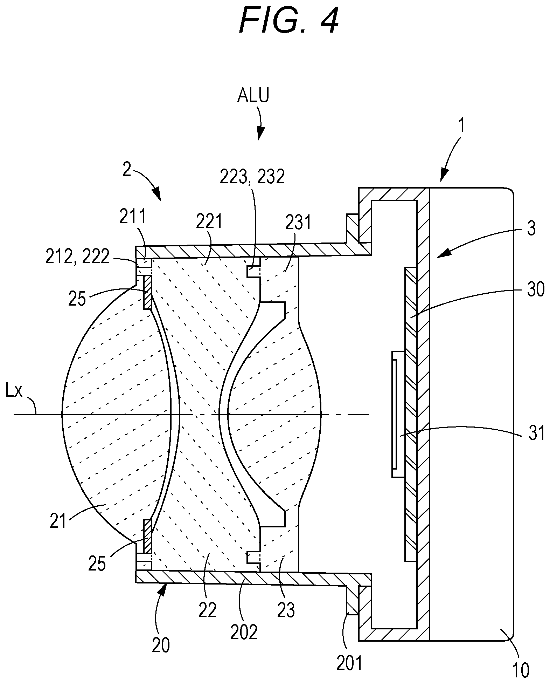

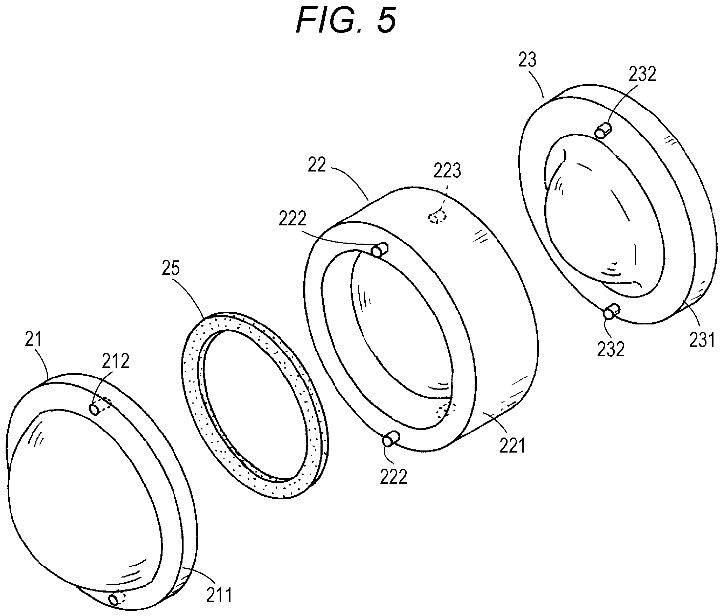

Fig. 4 is a longitudinal sectional view of the ADB lamp unit ALU, and Fig. 5 is an exploded perspective view of the lenses 21 to 23 of the projection lens 2. The lens barrel 20 of the projection lens 2 is made of resin, a rear portion thereof is formed as a fixed portion 201, and a portion on the front side of the fixed portion 201 is formed as a lens holding portion 202. The fixed portion 201 has a shape covering the front surface side of the light source unit 3, and the lens barrel 20 is fixed to and supported by the unit case 1 by being coupled to the unit case 1. The lens holding portion 202 is formed in a cylindrical shape, and the first to third lenses 21 to 23 are disposed and held therein.

The three lenses 21 to 23 disposed in the lens barrel 20 have a triplet lens configuration including three lenses of a first lens 21, a second lens 22, and a third lens 23 from the front side to the rear side, and the projection lens 2 is configured as a composite lens having a positive refractive power as a whole. Each of the lenses 21 to 23 is internally held by the lens barrel 20 in a state where each lens optical axis is coaxially disposed with respect to the lens optical axis Lx of the projection lens 2. Note that a front-rear direction means a lamp front-rear direction along the lens optical axis Lx of the projection lens 2.

Each of the first to third lenses 21 to 23 is made of translucent resin. For example, these lenses 21 to 23 are made of acrylic resin (PMMA) or polycarbonate resin (PC). The first lens 21 is a biconvex lens having a positive refractive power, the second lens 22 is a biconcave lens having a negative refractive power, and the third lens 23 is a biconvex lens having a positive refractive power. In addition, the lens surface of each of the first to third lenses 21 to 23 is formed as a predetermined spherical surface or aspherical surface, and the refractive index and Abbe number of the resin forming each lens are appropriately set, thereby reducing aberration in the projection lens 2.

Flange portions protruding in the outer diameter direction are formed on peripheral edge portions of the first to third lenses 21 to 23, respectively. The flange portions of the lenses 21 to 23 are referred to as a first flange portion 211, a second flange portion 221, and a third flange portion 231, respectively. Of the lenses 21 to 23, the front surface and rear surface of the flange portions 211, 221, 231 of the adjacent lenses 21, 22 and 22, 23 are brought into contact with each other in the lens thickness direction, so that a required lens interval between the lenses 21 to 23 is held along the lens optical axis Lx.

In the first flange portion 211, a through hole 212 penetrating the first flange portion 211 in the lens optical axis direction is opened at each of upper and lower positions. In the second flange portion 221, a first protrusion 222 protruding forward is formed at each of upper and lower positions on the front surface, and a blind hole 223 is opened rearward at each of upper and lower positions on the opposite rear surface. In the third flange portion 231, a second protrusion 232 protruding forward is formed at each of upper and lower positions on the front surface. Then, the first protrusion 222 of the second flange portion 221 is inserted into the through hole 212 of the first flange portion 211. Moreover, the second protrusion 232 of the third flange portion 231 is inserted into the blind hole 223 of the second flange portion 221. As a result, positioning in the circumferential direction between the first to third lenses 21 to 23 is performed.

The first to third lenses 21 to 23 disposed in the lens barrel 20 are held on the lens barrel 20 by bonding or welding. For example, although not shown, piercing holes in the radial direction are opened at a plurality of locations on the peripheral surface of the lens barrel 20 to expose part of the peripheral surface of each of the lenses 21 to 23 in each piercing hole. Then, laser light is emitted through these piercing holes to melt the piercing holes and part of the lens peripheral surface, thereby welding the lenses 21 to 23. Alternatively, a configuration is adopted, in which the lenses 21 to 23 are bonded by filling these piercing holes with a molten adhesive. This eliminates the need for an independent holder for holding the lenses 21 to 23 in the lens barrel 20, thereby reducing the number of components of the projection lens 2 and enabling size and weight reduction.

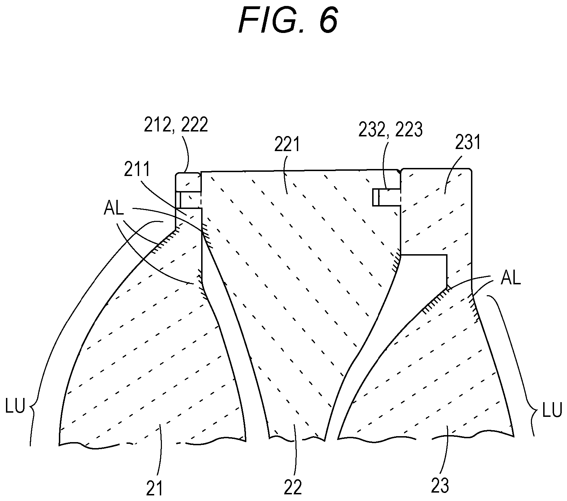

Here, the first to third lenses 21 to 23 are formed by resin molding. However, in a portion where a mold surface, particularly a cavity surface, is changed at a steep angle, a smooth flow of resin in a mold is blocked, the lens shape is not formed as designed, and a low accuracy region with reduced shape accuracy may be formed as described above. Fig. 6 is an enlarged view of part of each of the lenses 21 to 23, and in each of the lenses 21 to 23, a low accuracy region AL is easily formed around a lens effective region (region through which light for forming the light distribution pattern is transmitted, such as a spherical surface or an aspherical surface) LU, in other words, in a peripheral edge region of the lens effective region LU, which is a boundary region with the flange portion 211, 221, 231.

In particular, since each of the lens effective regions LU of the front surface of the first lens 21 and the front surface of the third lens 23 has a curved surface with a relatively short curvature radius as compared with the lens effective regions of other lenses, the low accuracy region AL becomes noticeable in these regions. When such a low accuracy region AL is formed, abnormal refraction occurs, in which light transmitted through the lens effective region LU is not directed in a designed direction, and as will be described later, the accuracy of the projected light distribution pattern is reduced, or glare occurs. Note that the low accuracy region AL may also be formed on the rear surfaces of the first lens 21 and the third lens 23 or the front surface and rear surface of the second lens 22.

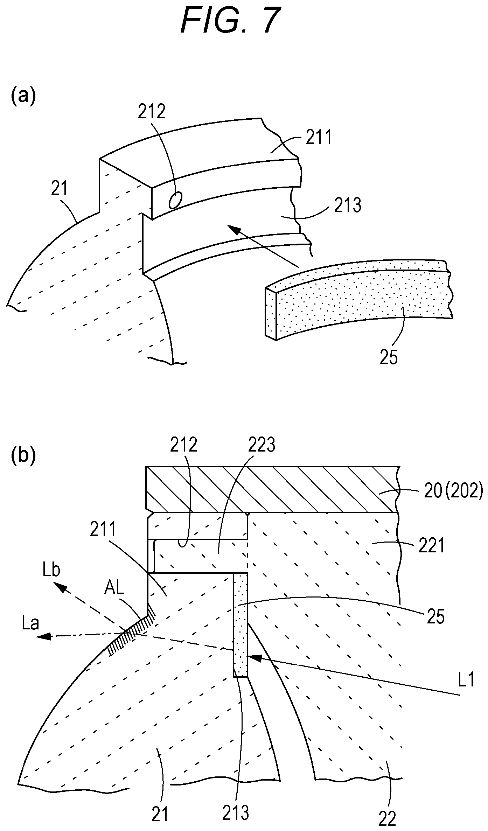

In the projection lens 2, a light shielding ring prevents reduction in the accuracy of the light distribution pattern and occurrence of glare due to the low accuracy region AL. Although details will be described later, as shown in a partially-broken enlarged perspective view and an enlarged longitudinal sectional view in Figs. 7(a) and 7(b), an annular recess 213 recessed with a required dimension in the lens optical axis direction is formed in a portion along the inner periphery of the first flange portion 211 on the rear surface of the first lens 21. Then, a light shielding ring 25 is disposed in the recess 213, and is sandwiched between the first lens 21 and the second lens 22. The light shielding ring 25 is formed in a circular ring plate shape by an opaque member. For example, the light shielding ring 25 is formed by punching a metal plate.

As can be seen from Fig. 7(b), the outer diameter dimension of the light shielding ring 25 is substantially equal to the outer diameter dimension of the recess 213 formed in the first flange portion 211, and when the first to third lenses 21 to 23 are incorporated into the lens barrel 20, the light shielding ring 25 is fitted into the recess 213 and is sandwiched between the first lens 21 and the second lens 22 in the lens optical axis direction. Furthermore, the inner diameter dimension of the light shielding ring 25 is set to such a diameter dimension that the low accuracy region AL at the peripheral edge of the lens effective region LU of the first lens 21 is covered. That is, the inner diameter dimension of the light shielding ring 25 is set to such an inner diameter dimension that an inner edge portion thereof is positioned on the inner diameter side with respect to the low accuracy region AL.

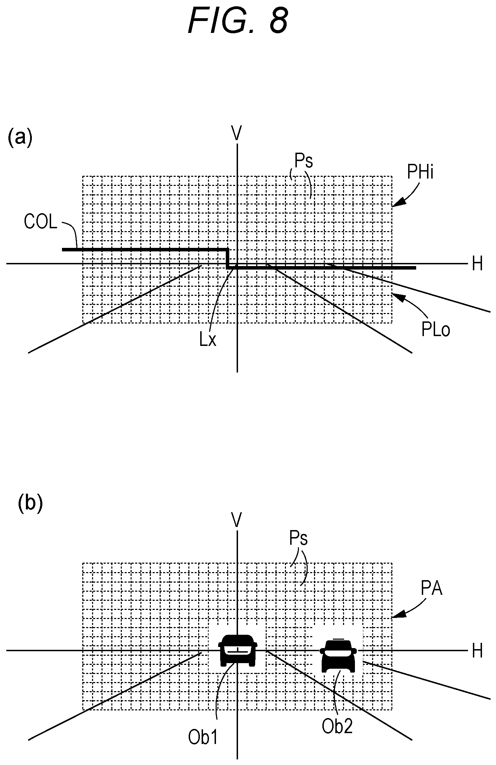

In the head lamp HL including the projection lens 2 having the above configuration, when the lighting control switch 43 is set to the high beam light distribution by the driver, the ADB control circuit 41 causes substantially all the micro LEDs 32 of the micro LED array 31 to emit light, and a high beam light distribution pattern PHi is projected as schematically shown in Fig. 8(a). When the lighting control switch 43 is set to the low beam light distribution, a low beam light distribution pattern PLo having a cutoff line COL is projected. In this figure, V is a vertical line passing through the optical axis Lx of the projection lens, and H is a horizontal line passing through an angular position slightly above the optical axis Lx.

When the lighting control switch 43 is set to the ADB light distribution control, the vehicle ECU 42 detects a preceding vehicle Ob1 and an oncoming vehicle Ob2 as front vehicles present in the front region of the automobile based on the image captured by the in-vehicle camera 44. When the front vehicle is detected, the ADB control circuit 41 projects an ADB light distribution pattern PA in which light is reduced or shielded in a region corresponding to an illumination region overlapping with the detected front vehicle. In this ADB light distribution pattern PA, as shown in Fig. 8(b), light in the illumination region in which the front vehicles Ob1, Ob2 are present is selectively reduced or shielded to prevent dazzling of the front vehicles Ob1, Ob2. The illumination region where the front vehicles Ob1, Ob2 are not present is illuminated with predetermined brightness, and the ADB light distribution control is executed with enhanced visibility.

In projection of the ADB light distribution pattern PA, as shown in Fig. 8(b), it is required to sharpen a boundary between a region where the front vehicles Ob1, Ob2 are present and light is shielded or reduced and an illuminated region where these vehicles are not present. When the boundary is unclear, there is a possibility that part of the light pattern is emitted to the front vehicles Ob1, Ob2 to dazzle occupants in the front vehicles. In this case, when abnormal refraction occurs in the projection lens 2, abnormally refracted light is projected on the light-reduced or light-shielded region, and the accuracy of the light distribution pattern is reduced or glare occurs.

In the projection lens 2 of the embodiment, since the light shielding ring 25 is disposed between the first lens 22 and the second lens 23, it is possible to shield light which is abnormally refracted in the low accuracy region AL of the first lens 21. Of light emitted from the light source unit 3 and transmitted through the third lens 23 and the second lens 22, light L1 having entered the peripheral edge portion of the first lens 21 is normally refracted by the first lens 21 as designed and becomes effective light for forming the light distribution pattern, such as light La indicated by a two-dot chain line if the light shielding ring 25 is not present, as schematically shown in Fig. 7(b). However, if the low accuracy region AL is present in the first lens 21, the light L1 is abnormally refracted in the low accuracy region AL when emitted from the first lens 21 as light Lb indicated by a broken line. For this reason, the boundary of the illumination region becomes unclear due to the abnormally refracted light, and the accuracy of the light distribution pattern is reduced or glare occurs.

In the embodiment, since the light shielding ring 25 is provided, the light L1 is shielded by the light shielding ring 25 and is prevented from being projected forward from the first lens 21. In this manner, the light L1 directed to the low accuracy region AL of the first lens 21 is shielded by the light shielding ring 25 and is prevented from entering the first lens 21, so that the abnormally refracted light is not emitted from the first lens 21. Thus, the abnormally refracted light is not included in the light emitted from the projection lens 2 and projected toward the light distribution region of the light distribution pattern, and the unclear boundary of the illumination region shown in Fig. 8 due to the abnormally refracted light does not occur, so that it is possible to prevent reduction in the accuracy of the light distribution pattern and glare.

In addition, in the projection lens 2 of the embodiment, the first to third lenses 21 to 23 are directly held by the lens barrel 20, and the independent holder for holding each of the lenses 21 to 23 is unnecessary. As a result, the number of components forming the projection lens 2 can be reduced, and the weight and size of the projection lens 2 can be reduced.

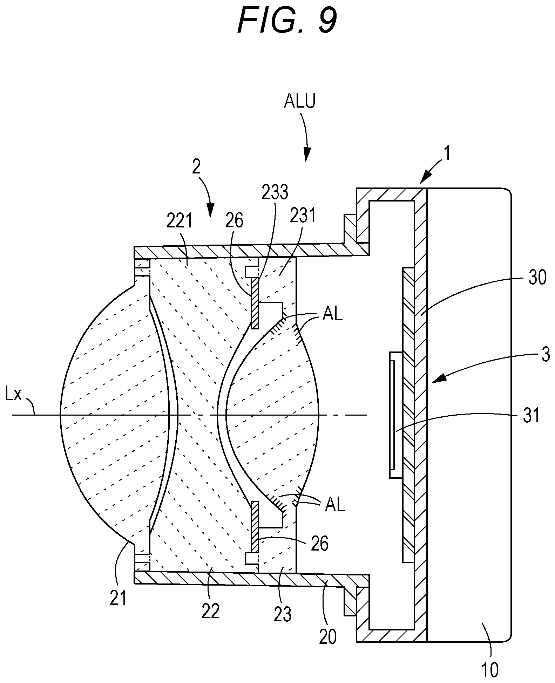

As another embodiment of the present invention, as shown in Fig. 9, a light shielding ring 26 may be disposed between the second lens 22 and the third lens 23. In this case, for example, a recess 233 is formed in a peripheral edge portion of the front surface of the third lens 23. The light shielding ring 26 is fitted into this recess 233, and is sandwiched between the second lens 22 and the third lens 23. The light shielding ring 26 is formed so as to cover the low accuracy region AL at the peripheral edge of the lens effective surface portion of the third lens 23 as shown in Fig. 6. At the same time, the light shielding ring 26 may be formed so as to cover the low accuracy region AL in the second lens 22.

In this embodiment, light emitted from the light source unit 3 enters the projection lens 2, and is transmitted from the third lens 23 through the second lens 22. At this time, abnormal refraction may occur in the low accuracy region AL of the third lens 23, but this light is shielded by the light shielding ring 26. Thus, the light abnormally refracted as described above is not emitted from the projection lens 2 and projected toward the light distribution region of the light distribution pattern, and the unclear boundary of the illumination region shown in Fig. 8 does not occur, and it is possible to prevent reduction in the accuracy of the light distribution pattern and glare.

Furthermore, although not shown, two light shielding rings may be disposed in the projection lens 2. That is, both the light shielding ring 25 disposed between the first lens 21 and the second lens 22 as shown in Fig. 4 and the light shielding ring 26 disposed between the second lens 22 and the third lens 23 as shown in Fig. 9 may be disposed. In this manner, almost all the light abnormally refracted in the low accuracy region of each of the first to third lenses 21 to 23 is shielded by the two light shielding rings 25, 26, and an effect of further preventing reduction in the accuracy of the light distribution pattern and glare can be obtained.

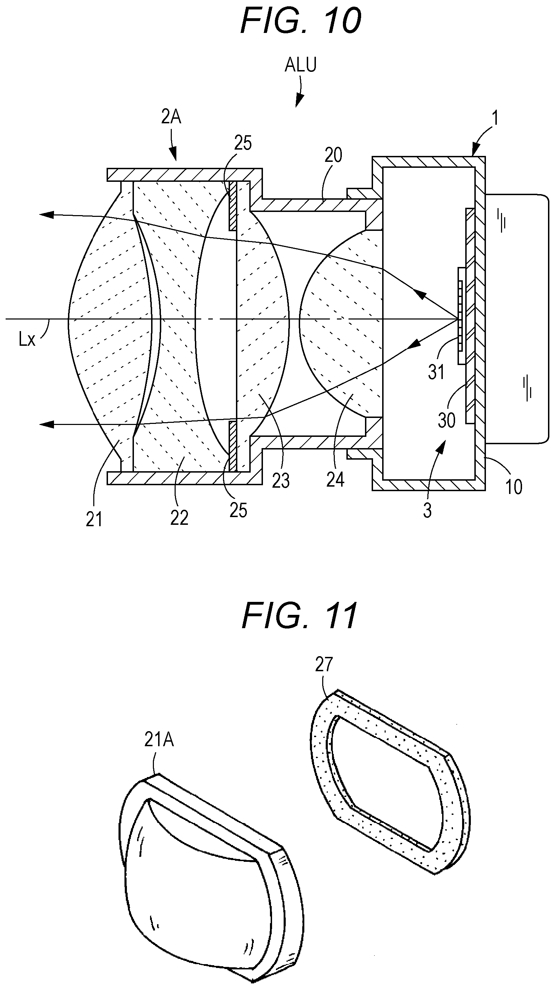

The present invention may include a lens in which part of the projection lens 2 is made of glass. Fig. 10 is a longitudinal sectional view of a projection lens 2A of the ADB lamp unit ALU as an example, and elements equivalent to those of the projection lens 2 are denoted by the same reference numerals. This projection lens 2A includes four lenses. The first lens 21 and the second lens 22 are made of resin, and the third lens 23 and a fourth lens 24 are made of glass. As glass, for example, N-K9L (borosilicate crown glass) is used. The third lens 23 and the fourth lens 24 are plano-convex lenses in which spherical surfaces are disposed so as to face each other. The light shielding ring 25 is disposed between the second lens 22 and the third lens 23. The light shielding ring 25 is disposed so as to cover at least the low accuracy region formed in the peripheral edge portion of the second lens 22, and is sandwiched between the third lens 22 and the third lens 23.

Also in this projection lens 2A, light transmitted through the low accuracy region formed in the peripheral edge portion of the second lens 22 is shielded by the light shielding ring 25, and the effect of preventing reduction in the accuracy of the light distribution pattern and glare can be obtained. In addition, according to this projection lens 2A, since the third lens 23 and the fourth lens 24 disposed close to the light source unit 3 are made of glass, thermal deformation of the fourth lens 24 and the third lens 23 due to heat generated by the micro LED array 31 of the light source unit 3 is prevented. Further, the third lens 23 and the fourth lens 24 reduce transfer of heat of the light source unit 3 to the second lens 22 or the first lens 21, which prevents thermal deformation in these resin lenses.

The projection lens of the embodiment described above is configured as the lens having the circular shape when viewed from the front, but as shown in an exploded perspective view of Fig. 11, part of a circular peripheral edge portion, here, upper and lower side portions, may be cut off to form a lens 21A having a shape close to a horizontally long oval shape when viewed from the front. These upper and lower side portions are regions through which light contributing to formation of the light distribution pattern as shown in Fig. 8 is not transmitted. Also in the lens 21A having such a shape, when resin molding is performed, the low accuracy region may be formed in a boundary region with the flange portion of the peripheral edge portion of the lens. Thus, by forming the light shielding ring 25 in the shape corresponding to the lens 21A and sandwiching the light shielding ring 25 between the adjacent lenses, the influence of abnormally refracted light caused in the low accuracy region on the light distribution pattern is prevented.

Here, in the ADB lamp unit of the embodiment, the example where the light source is formed of the micro LED array, that is, the multi-divided LEDs, to form the ADB light distribution has been described, but the present invention can also be applied to a lamp using a micro electro mechanical systems (MEMS) mirror array as the light source. Alternatively, the present invention is not limited to the lamp having the configuration in which light from the light source is directly projected by the projection lens, and can also be applied to a lamp using a projection lens that projects light optically scanned (scanned) with reflected light from a rotating mirror and a swing mirror.

The present international application claims priority based on Japanese Patent Application No. 2023-180259 filed on October 19, 2023, and the entire contents of Japanese Patent Application No. 2023-180259 are incorporated herein by reference.

The description of the specific embodiments of the present invention is presented for the purpose of illustration. The specific embodiments are not intended to be exhaustive or to limit the present invention as it is in the form described. It is obvious to those skilled in the art that many modifications and alterations are possible in light of the contents of the description above.

### LIST OF REFERENCE SIGNS

- 1: ADB lamp unit
- 2, 2A: Projection lens
- 3: Light source unit
- 4: ADB control system
- 10: Unit case (heat sink)
- 20: Lens barrel
- 21 to 24: First lens to fourth lens
- 25 to 27: Light shielding ring
- 31: Micro LED array
- 32: Micro LED
- L-HL, R-HL: Head lamp
- ALU: ADB lamp unit
- AL: Low accuracy region
- LU: Lens effective region

## Claims

1. A projection lens in which a plurality of resin lenses is disposed side by side in a lens optical axis direction in a lens barrel and light emitted from a light source is projected in a required light distribution pattern, the projection lens comprising:
a light shielding ring disposed between the lenses adjacent to each other in the lens optical axis direction and covering a peripheral edge region of the lens.

2. The projection lens according to claim 1, wherein
the peripheral edge region of the lens is a region including a low accuracy region caused when the lens is resin-molded, and
the light shielding ring has a shape covering at least the low accuracy region.

3. The projection lens according to claim 1, wherein
the lens includes a lens effective region through which light for projecting a light distribution pattern is transmitted and a flange portion provided at a peripheral edge portion of the lens effective region, and
the peripheral edge region of the lens is a region along a boundary between the lens effective region and the flange portion.

4. The projection lens according to claim 1, wherein the light shielding ring shields light to be transmitted through the peripheral edge region of the lens.

5. The projection lens according to claim 1, wherein
the light shielding ring is disposed between adjacent ones of the lenses, and is sandwiched by the adjacent ones of the lenses in the lens optical axis direction.

6. The projection lens according to claim 1, wherein the projection lens is held on the lens barrel by welding or bonding.

7. A projection lens in which at least one resin lens and at least one glass lens are disposed side by side in a lens optical axis direction in a lens barrel and light emitted from a light source is projected in a required light distribution pattern, the projection lens comprising:
a light shielding ring disposed between the lenses adjacent to each other in the lens optical axis direction and covering a peripheral edge region of the resin lens.

8. A vehicle lighting fixture comprising:
a light source; and
a projection lens that projects light emitted from the light source in a required light distribution pattern,
wherein
the projection lens includes at least one resin lens,
a low accuracy region is included in a lens peripheral edge region of the resin lens, and
a light shielding ring covering the peripheral edge region of the resin lens is disposed between lenses adjacent to each other in a lens optical axis direction.

9. The vehicle lighting fixture according to claim 8, wherein the light source includes a multi-divided light emitting element in which many micro light emitting elements are arranged, and performs ADB light distribution control by controlling light emission from the micro light emitting elements.
